Europäisches Patentamt

European Patent Office

Office européen des brevets

(19)

(11) Numéro de publication: **0 237 418 B1**

(12) **FASCICULE DE BREVET EUROPEEN**

(45) Date de publication du fascicule du brevet:
**11.07.90**

(21) Numéro de dépôt: **87400478.1**

(22) Date de dépôt: **04.03.87**

(51) Int. Cl.[5]: **C08L 5/00,** A01N 25/10,
C08B 37/00

(54) Compositions aqueuses contenant un composé cationique et de la gomme xanthane.

(30) Priorité: **10.03.86 FR 8603337**

(43) Date de publication de la demande:
**16.09.87 Bulletin 87/38**

(45) Mention de la délivrance du brevet:
**11.07.90 Bulletin 90/28**

(84) Etats contractants désignés:
**AT BE CH DE ES FR GB GR IT LI LU NL SE**

(56) Documents cités:
**FR-A- 2 146 504**
**FR-A- 2 206 049**
**FR-A- 2 409 302**
**US-A- 3 996 378**

**TEXTILE CHEMIST AND COLORIST,**
**vol. 11, no. 2, février 1979, pages 46-50, American**
**Association of Textile Chemists and Colorists; J.S.**
**RACCIATO: "Printing cationic dyes with Xanthan gum**
**or algin"**
**CARBOHYDRATE RESEARCH,**
**vol. 76, 1979, pages 277-280, Elsevier Scientific**
**Publishing Co., Amsterdam, NL; G. HOLZWARTH et al.:**
**"Pyruvate-free xanthan"**

(73) Titulaire: **RHONE-POULENC CHIMIE, 25, quai Paul**
**Doumer, F-92408 Courbevoie Cédex(FR)**

(72) Inventeur: **Schuppiser, Jean-Luc, 12, allée d'Apollon**
**Gressy, F-77410 Claye Souilly(FR)**

(74) Mandataire: **Tavernier, Colette et al, RHONE-POULENC**
**INTERSERVICES Service Brevets Chimie 25, Quai Paul**
**Doumer, F-92408 Courbevoie Cédex(FR)**

## Description

L'invention concerne des compositions de matières contenant en solution aqueuse un composé organique cationique et de la gomme xanthane. L'invention a pour objet plus particulier des compositions aqueuses phytosanitaires contenant une matière active cationique.

La gomme xanthane, en raison de ses propriétés épaississantes, de son pouvoir de suspension elevé et de sa rhéologie particulière, est utilisée largement dans des industries variées, notamment dans les industries de l'alimentation, du bâtiment, du textile, de la peinture, du papier, des cosmétiques, de l'agriculture, du pétrole, etc...

La gomme xanthane est un hétéropolysaccharide anionique qui consiste en unités D-glucose, D-mannose et D-acide glucuronique avec des radicaux acétyl et pyruvate fixés sur les unités mannose. La proportion d'acide pyruvique varie en fonction de la souche spécifique utilisée, de la composition du milieu de culture, des conditions de fermentation et d'extraction et est comprise, dans les grades industriels, entre 2,5 et 4,9 %.

Du fait de son caractère anionique, la gomme xanthane est reconnue être généralement incompatible avec les ions cationiques, ce qui est un obstacle à son emploi. Ainsi il est connu dans le domaine agricole, d'utiliser la gomme xanthane comme agent épaississant des compositions aqueuses contenant une matière active hydrosoluble à effet pesticide ou comme agent de stabilité et de suspension des dispersions aqueuses coulables contenant une matière active finement divisée ("flowables"). Ces solutions ou dispersions sont livrées dans le commerce sous forme d'un concentrat à 20-60 % de matière active et 0,02 à 2 % environ xanthane.

Un problème particulier se pose à l'utilisateur qui, dans certains cas, souhaite, afin d'éviter plusieurs manipulations, mélanger la dispersion diluée du pesticide insoluble dans l'eau avec un pesticide hydrosoluble tel qu'un sel d'ammonium quaternaire. Il a été constaté en effet que, aux faibles concentrations en xanthane des formulations diluées, il se forme un complexe avec l'ammonium quaternaire qui se traduit par la formation de fibres denses insolubles dans l'eau. Outre que la formation du complexe conduit à une diminution de l'effet pesticide, des difficultés considérables ont été rencontrées au cours des pulvérisations faites sur le terrain, à cause du bouchage des buses de pulvérisation produit par les fibres insolubles.

La présente invention à pour objet principal de fournir des compositions aqueuses pseudoplastiques épaissies par de la gomme xanthane et renfermant un additif cationique qui puissent être diluées sans précipitation.

L'invention a pour objet plus particulier de fournir des compositions pesticides concentrées coulables contenant à la fois une matière active finement divisée insoluble dans l'eau et une matière active cationique hydrosoluble, telle que la partie hydrosoluble ne précipite pas par dilution pour former des précipités obstruants lors de son application sur le terrain.

Il est enfin souhaitable que l'on puisse se procurer des dispersions concentrées coulables contenant une matière active pesticide finement divisée insoluble dans l'eau et que ces dispersions puissent être diluées et additionnées d'une matière active cationique hydrosoluble sans précipitation.

La demanderesse a trouvé que l'incompatibilité de la gomme xanthane en solution fortement diluée avec les agents cationiques hydrosolubles était dépendante du taux d'acide pyruvique lié à la molécule de xanthane.

Selon l'invention, les compositions aqueuses de matières sont caractérisées en ce qu'elles contiennent au moins un composé organique cationique hydrosoluble et de la gomme xanthane ayant un taux d'acide pyruvique inférieur à environ 2 %.

La préparation de la gomme xanthane par fermentation d'un hydrate de carbone sous l'action d'un microorganisme approprié est décrite dans de nombreuses publications. On peut se référer par exemple aux brevets US 3 020 206, US 3 020 207, US 3 391 060. Comme microorganisme, on utilise généralement les bactéries du genre Xanthomonas, et plus particulièrement X. campestris, bien que d'autres microorganismes aient été répertoriés dans la littérature pour produire des hétéropolysaccharides de structure similaire. Comme indiqué ci-dessus, les souches ordinaires de Xanthomonas produisent, dans les conditions industrielles usuelles de culture, un xanthane ayant un taux d'acide pyruvique supérieur à 2 %.

La dépyruvilation de la gomme xanthane peut être obtenue de manière conventionnelle par chauffage du moût de fermentation ou d'une solution reconstituée à partir de poudre, à un pH acide et à une température égale ou supérieure à environ 90°C (Carbohydr. Res. 1979, 76, 277-80).

La gomme xanthane utilisée dans les compositions de l'invention présente un taux d'acide pyruvique compris entre 0 et environ 2 %.

Les composés cationiques hydrosolubles formant des complexes insolubles avec la gomme xanthane sont représentés principalement par des ammoniums quaternaires tels que chlorures, bromures, sulfates. Des exemples représentatifs de composés d'ammonium quaternaire qui réagissent avec les hétéropolysaccharides sont décrits dans le brevet US 3 163 602 auquel on peut se référer. Les ammoniums quaternaires qui portent une chaîne alkyle leur conférant un caractère hydrophobe et les ammoniums quaternaires difonctionnels sont particulièrement aptes à former des complexes insolubles.

Les composés cationiques et notamment les ammoniums quaternaires peuvent être des agents tensioactifs qui sont utiles dans des domaines d'application variés.

Dans le domaine phytosanitaire, les composés d'ammonium quaternaire sont employés comme bactéricides, fongicides, herbicides, régulateurs de croissance des plantes. Comme exemples représentatifs de products commerciaux, on peut citer le bromure de lauryl diméthyl benzylammonium ; le dichlorure de 1,1'-diméthyl 4,4'-bipyridinium ou Paraquat® ; le diméthylsulfate de 1,1'-diméthyl 4,4'-bipyridinium ; le dibromure de 1,1'-éthylène 2,2'-bipyridinium ou diquat ; le méthylsulfate de 1,2-diméthyl 3,5-diphényl pyrazolium ou difenzoquat ; le chlorure de 2-chloroéthyltriméthylammonium ou chlormequat ; le bromure de 1-allyl-1-(3,7-diméthyloctyl) pipéridinium ou piproctanyl.

La gomme xanthane et le composé cationique sont présents dans les compositions en quantités usuelles dans les techniques considérées.

L'invention ne requiert pas un dosage particulier puisqu'elle a principalement pour objet la stabilisation de la gomme xanthane qui est un constituant mineur de la composition.

La gomme xanthane est présente de manière générale en quantité comprise entre 0,005 et 2 %. Avantageusement, les compositions diluées contiennent la gomme xanthane en quantité inférieure à 0,1 %. La quantité du composé cationique peut varier dans une très large mesure par exemple entre 0,01 et 2,5 % pour les solutions diluées et entre 2,5 et 70% pour les concentrats.

Les compositions pesticides selon l'invention peuvent également comprendre une matière active finement divisée insoluble dans l'eau ainsi que, le cas échéant, des additifs usuels tels que agents tensio-actifs, anti-mousses, agents abaissant le point de congélation etc...

Les compositions de l'invention peuvent être préparées par simple mélange des ingrédients sous agitation. Elles peuvent se présenter sous forme d'une solution ou d'une suspension concentrée ou diluée contenant au moins le composé organique cationique et le gomme xanthane en solution dans l'eau. Il est préférable de dissoudre préalablement la gomme xanthane dans l'eau puis d'ajouter le composé cationique hydrosoluble, éventuellement le composé insoluble finement divisé et, le cas échéant, les additifs conventionnels. On peut préparer un concentrat contenant les divers ingrédients puis le diluer à la dose requise sur le site opérationnel.

Sous forme diluée, applicable par pulvérisation, les compositions phytosanitaires selon l'invention peuvent également être préparées par dilution d'un concentrat aqueux contenant une matière active insoluble à effet pesticide en suspension dans le liquide épaissi par la gomme xanthane et solubilisation à la dose requise de la matière active cationique hydrosoluble à effet pesticide.

La compatibilité des solutions aqueous diluées de gomme xanthane ayant un taux d'acide pyruvique inférieur à 2 % avec un composé cationique ammonium quaternaire est illustrée par les exemples suivants donnés à titre non limitatif de l'invention.

Exemple 1

A partir d'une gomme xanthane à 3,3 % d'acide pyruvique, on prépare par hydrolyse acide différents lots ayant un taux variable en acide pyruvique.

Le taux d'acide pyruvique (g d'acide pour 100 g de xanthane) est déterminé par dosage colorimétrique utilisant le 2,4 dinitrophénylhydrazine comme réactif sur la gomme xanthane hydrolysée.

A l'aide de chaque lot, on prépare des solutions aqueuses de concentration 0,1 %, 0,05 % et 0,005 %. A chacune des solutions on ajoute sous agitation une solution aqueuse à 10 % de dichlorure de 1,1'-diméthyl-4,4'-bipyridinium (Paraquat®) de manière à obtenir une concentration en matière active comprise entre 0,01 et 0,2 %. La précipitation du complexe de gomme xanthane et d'ammonium quaternaire, si elle a lieu, est immédiate sous forme de fibres longues insolubles.

Les différents essais et observations visuelles sont représentés dans le Tableau suivant. On constate que :
- pour des concentrations en xanthane de 0,1 %, la gomme xanthane est compatible avec le paraquat aux doses utilisées quel que soit le taux d'acide pyruvique,
- à taux de pyruvique constant, la compatibilité décroit en fonction inverse de la concentration en gomme,
- la formation du complexe décroit avec la diminution du taux d'acide pyruvique. Pour un taux d'acide pyruvique égal ou inférieur à 1,7 %, la gomme xanthane est considérée comme étant compatible avec le paraquat, quelle que soit la concentration. La présence de fibres courtes, ténues, peu nombreuses, qui sont observées dans quelques essais n'est pas un obstacle à l'utilisation des solutions par pulvérisation.

TABLEAU 1

| Gomme Xanthane % | Taux acide pyruvique | Paraquat ® % | | | | |
|---|---|---|---|---|---|---|
| | | 0,01 | 0,02 | 0,05 | 0,1 | 0,2 |
| 0,005 | 0,4 | 0 | ·0 | 0 | 0 | 0 |
| | 1 | 0 | 0 | 0 | 0+ | 0+ |
| | 1,7 | 0 | 0 | 0+ | 0++ | 0++ |
| | 2,4 | 0 | 0+ | + | + | + |
| | 3,3 | + | + | + | + | + |
| 0,05 | 0,4 | 0 | 0 | 0 | 0 | 0 |
| | 1,0 | 0 | 0 | 0 | 0 | 0 |
| | 1,7 | 0 | 0 | 0 | 0 | 0 |
| | 2,4 | 0 | 0 | 0 | 0+ | 0+ |
| | 3,3 | 0+ | + | + | + | + |
| 0,1 | 1,7 | 0 | 0 | 0 | 0 | 0 |
| | 3,3 | 0 | 0 | 0 | 0 | 0 |

```
0    : absence de fibres                                    ⎤
0+   : rares fibres de 1 à 2 mm - texture fine              ⎥  COMPATIBLE
0++  : fibres 1 à 2 mm - texture fine                       ⎦
+    : fibres longues ⟩ 2 mm - texture grosse - INCOMPATIBLE
```

4

Exemple 2

A l'aide des lots de gomme xanthane de l'exemple 1, on prépare des solutions aqueuses à 0,01 % en poids. Dans chacune des solutions on dissout une quantité de bromure de lauryl diméthyl benzylammonium (CEQUARTYL 50 ®) de manière à obtenir une concentration en matière active comprise entre 0,01 et 1 %. Les résultats au regard de la précipitation du complexe figurent dans le Tableau 2.

TABLEAU 2

| Gomme Xanthane % | Taux acide pyruvique | Céquartyl A 50 % | | | | |
|---|---|---|---|---|---|---|
| | | 0,01 | 0,02 | 0,05 | 0,1 | 1 |
| | 0,4 | O | O | O | O | O |
| | 1,0 | O | O | O | O | O |
| | 1,7 | O | O | O | O | O |
| 0,01 | 2,4 | O+ | + | + | + | + |
| | 3,3 | + | + | + | + | + |

```
O    : absence de fibres                                    ⎤
                                                            ⎥ COMPATIBLE
O+   : rares fibres de 1 à 2 mm - texture fine              ⎦

+    : fibres longues › 2 mm - texture grosse - INCOMPATIBLE
```

Exemple 3

On prépare une suspension fluide concentrée d'atrazine (chloro-2 éthylamino-4 isopropylamino-6 triazine-1,3,5) :
Atrazine 400 g/l
Tensio-actif anionique 30 g/l
Gomme xanthane (Acide pyruvique 1,7 %) 1,6 g/l
Eau q.s.p. 1 litre

40 ml de la suspension-fluide concentrée sont dilués dans 940 ml d'eau distillée. On ajoute 20 ml de Paraquat® en solution aqueuse à 2 %. On n'observe aucune formation de fibres insolubles.

En comparaison, une formulation identique, mais préparée avec de la gomme xanthane à 3,4 % d'acide pyruvique, forme des fibres denses immédiatement après addition de Paraquat® dans les mêmes conditions de dilution.

## Revendications

1. Compositions aqueuses de matières qui contiennent au moins un composé organique cationique hydrosoluble et de la gomme xanthane, caractérisé en ce que ladite gomme contient un taux d'acide pyruvique inférieur à 2 %.

2. Compositions aqueuses selon la revedication 1 caractérisées en ce que le composé cationique est un ammonium quaternaire.

3. Compositions aqueuses selon l'une des revendications 1 ou 2 caractérisées en ce que le composé cationique est une matière active à effet pesticide.

Compositions aqueuse selon l'une des revendications 1 ou 2 caractérisées en ce que le composé cationique est un agent tensio-actif.

5. Compositions aqueuse selon l'une des revendications 1 à 3 caractérisées en ce que la quantité de gomme xanthane est comprise entre 0,005 et 2 % en poids par rapport au support aqueux et la quantité du composé cationique est comprise entre 0,01 et 70 % en poids.

6. Compositions aqueuses selon la revendication 5 caractérisées en ce que la quantité de gomme xanthane est comprise entre 0,005 et 0,1 % en poids et la quantité du composé cationique est comprise entre 0,01 et 2,5 % en poids.

7. Compositions aqueuses pesticides caractérisées en ce qu'elles contiennent de la gomme xanthane ayant un taux d'acide pyruvique inférieur à 2 %, une matière active cationique hydrosoluble et, en dispersion stable, une matière active finement divisée insoluble dans l'eau.

8. Procédé de préparation des compositions pesticides selon la revendication 7 caractérisé en ce que l'on dilue un concentrat aqueux contenant une matière active insoluble en suspension dans le liquide épaissi par la gomme xanthane, et l'on ajoute la matière active cationique hydrosoluble.

## Patentansprüche

1. Wäßriges Mittel, die mindestens eine kationische wasserlösliche organische Verbindung und Xanthangummi enthalten, dadurch gekennzeichnet, daß der erwähnte Gummi einen Gehalt an Brenztraubensäure unter 2% aufweist.

2. Wäßrige Mittel nach Anspruch 1, dadurch gekennzeichnet, daß die kationische Verbindung ein quaternäres Ammoniumsalz ist.

3. Wäßrige Mittel nach einem der Ansprüche 1 oder 2, dadurch gekennzeichnet, daß die kationische Verbindung eine als Pestizid wirksame Substanz ist.

4. Wäßrige Mittel nach einem der Ansprüche 1 oder 2, dadurch gekennzeichnet, daß die kationische Verbindung ein grenzflächenaktives Mittel ist.

5. Wäßrige Mittel nach einem der Ansprüche 1 bis 3, dadurch gekennzeichnet, daß die Menge an Xanthangummi zwischen 0,005 und 2 Gew.-%, bezogen auf den wäßrigen Träger, und die Menge an kationischer Verbindung zwischen 0,01 und 70 Gew.-% beträgt.

6. Wäßrige Mittel nach Anspruch 5, dadurch gekennzeichnet, daß die Menge an Xanthangummi zwischen 0,005 und 0,1 Gew.-% und die Menge an kationischer Verbindung zwischen 0,01 und 2,5 Gew.-% beträgt.

7. Wäßrige pestizide Mittel, dadurch gekennzeichnet, daß sie Xanthangummi enthalten mit einem Gehalt an Brenztraubensäure unter 2%, eine aktive kationische wasserlösliche Substanz und in stabiler Dispersion eine aktive Substanz, die fein zerteilt und in Wasser unlöslich ist.

8. Verfahren zur Herstellung von pestiziden Mitteln nach Anspruch 7, dadurch gekennzeichnet, daß man ein wäßriges Konzentrat, enthaltend eine aktive unlösliche Substanz in Suspension, in der durch Xanthangummi verdickten Flüssigkeit, verdünnt und die kationische wasserlösliche aktive Substanz zugibt.

## Claims

1. Aqueous compositions of substances which contain at least one water-soluble cationic organic compound and xanthan gum, characterized in that the said gum contains a pyruvic acid content of less than 2%.

2. Aqueous compositions according to Claim 1, characterized in that the cationic compound is a quaternary ammonium.

3. Aqueous compositions according to one of Claims 1 or 2, characterized in that the cationic compound is an active substance with pesticidal effect.

4. Aqueous compositions according to one of Claims 1 or 2, characterized in that the cationic compound is a surfactant.

5. Aqueous compositions according to one of Claims 1 to 3, characterized in that the quantity of xanthan gum is between 0.005 and 2% by weight relative to the aqueous carrier and the quantity of the cationic compound is between 0.01 and 70% by weight.

6. Aqueous compositions according to Claim 5, characterized in that the quantity of xanthan gum is between 0.005 and 0.1% by weight and the quantity of the cationic compound is between 0.01 and 2.5% by weight.

7. Pesticidal aqueous compositions characterized in that they contain xanthan gum which has a pyruvic acid content of less than 2%, a water-soluble cationic active substance and, in a stable dispersion, water-insoluble finely divided active substance.

8. Process for the preparation of pesticidal compositions according to Claim 7, characterized in that an aqueous concentrate containing an insoluble active substance in suspension is diluted in the liquid thickened with xanthan gum, and the water-soluble cationic active substance is added.